# EUROPÄISCHE PATENTANMELDUNG

(11) **EP 1 607 397 A1**
(43) Veröffentlichungstag der Anmeldung: **21.12.2005**
(21) Anmeldenummer: 05012396.7
(22) Anmeldetag: 09.06.2005
(51) Int. Cl.: C07F 9/00

(54) **Vanadium-Amido-Komplexe für die Olefinpolymerisation**

(30) Priorität: 17.06.2004 DE 102004029273
(71) Anmelder: LANXESS Deutschland GmbH, 51369 Leverkusen (DE)
(72) Erfinder: Arndt-Rosenau, Michael, Dr., 41539 Dormagen (DE); Sundermeyer, Jörg, Prof. Dr., 35041 Marburg (DE); Lemke, Martin, Dr., 50127 Bergheim (DE)

(57) **Zusammenfassung**

Die vorliegende Erfindung betrifft Verbindungen, die Vanadium der Oxidationsstufe +III oder + IV und eine oder mehrere Amidogruppen enthalten, ein Verfahren zur Herstellung dieser Verbindungen, die Verwendung der erfindungsgemäßen Verbindungen zur Herstellung einer Katalysatorzusammensetzungen, ein Verfahren zur Herstellung der Katalysatorzusammensetzung sowie ein Verfahren zur Herstellung von Homo- und/oder Copolymerisaten unter Verwendung der Katalysatorzusammensetzung.

## Beschreibung

Die vorliegende Erfindung betrifft Verbindungen, die Vanadium der Oxidationsstufe +III oder + IV und eine oder mehrere Amidogruppen enthalten, ein Verfahren zur Herstellung dieser Verbindungen, die Verwendung der erfindungsgemäßen Verbindungen zur Herstellung einer Katalysatorzusammensetzung, ein Verfahren zur Herstellung der Katalysatorzusammensetzung sowie ein Verfahren zur Herstellung von Homo- und/oder Copolymerisaten unter Verwendung der Katalysatorzusammensetzung.

Es besteht ein großer Bedarf an Verbindungen, die in Gegenwart gängiger Cokatalysatoren verbesserte Polymerisationsaktivitäten zeigen.

Lorber et al. haben in J. Chem. Soc., Dalton Trans. 2000, 4497-4498 und Inorg. Chem. 41 (2002), 4217-4226 die Synthese von Aryl-Imido-Vanadium(IV)-Verbindungen beschrieben, die als weitere Liganden auch Amidogruppen tragen können. Diese Verbindungen haben den Nachteil, dass sie in der Regel dimer oder polymer vorliegen, wenn die Koordinationssphäre nicht durch weitere Liganden abgesättigt wird.

Im J. Chem. Soc., Dalton Trans. 2000, 4497-4498 werden einige Ergebnisse für die Polymerisation von Ethen mit diesen Verbindungen offengelegt. Dabei zeigt sich, dass das Methylaluminoxan ein besserer Cokatalysator ist als einfache Aluminiumalkyle.

In Organometallics 19 (2000), 1963-1966 beschreiben Lorber et al. eine DiamidodichloroVanadium(IV)-verbindung und deren Verwendung als Katalysator für die Polymerisation von Ethen. Die Aktivierung erfolgt auch in diesem Fall durch Methylaluminoxan jedoch wird die Polymerisationsaktivität als gering beschrieben.

In US 3711455 beschreiben Cucinella et al. Polymerisationskatalysatoren auf Basis von:
(I) einer Vanadiumverbindung des Typs V(NR₂)₄ oder V(NR₂)₂X₂ wobei R eine Alkyl-, Aryl- oder Cycloalkylgruppe darstellt und X ein Halogenatom wie Cl, Br oder I ist; und
(II) einer Aluminiumalkylverbindung des Typs AlRₓX₃₋ₓ wobei R eine Alkyl-, Aryl-oder Cycloalkylgruppe darstellt und X ein Halogenatom wie Cl, Br oder I ist; und x zwischen 1 und 2 liegt.

Cucinella et al. lehren, dass die Verwendung eines solchen Katalysators die Copolymerisation von Monoolefinen und Diolefinen erlaubt. Jedoch sind die Aktivitäten dieser Katalysatoren nicht so hoch wie die der erfindungsgemäßen Katalysatorzusammensetzung.

In EP 950 670 beschreibt H.A. Zahalky die Verwendung eines Katalysatorsystems auf Basis von:
(I) einer Vanadiumverbindung des Typs VR^{a}R^{b}R^{c}R^{d} oder VR^{a}R^{b}R^{c}, wobei R^{a},R^{b},R^{c} und R^{d} gleichartig oder verschieden sind und jeweils aus Halogen oder -(NR^{e}R^{f}) ausgewählt werden. R^{e} und R^{f} sind Alkyl-, Alkenyl-, Aryl-, Cycloalkyl-, oder siliziumhaltige Kohlenwasserstoffgruppen; mindestens eine der Gruppen R^{a}-R^{c} ist eine solche Amidogruppe;
(II) einer aluminiumorganischen Verbindung als Cokatalysator; und
(III) einem Aktivator auf Basis einer Verbindung des Typs MR^{g}ₙ, wobei M ein Metall der 2. oder 12.Gruppe des Periodensystems sein kann und R^{g} eine C₁-C₁₂ Alkylgruppe darstellt; n entspricht der Valenzzahl von M.

Die Verwendung dieser Katalysatorsysteme ohne die Komponente (III) für die Olefinpolymerisation beschreiben N. Desmangles et al. in J. Organomet. Chem. 562 (1998), 53-60.

In Organometallics 19 (2000), 1963-1966 beschreiben Lorber et al. die Synthese eines Vanadium(IV)dichloro-Komplexes mit einem chelatisierenden Diamid als Liganden und berichten über eine in Verbindung mit MAO niedrige Aktivität für die Polymerisation von Ethen.

In J. Chem. Soc. Dalton Trans. 1997, 4795-4805 berichten C.P. Gerlach und J. Arnold über V(III)-Komplexe mit zwei Amido-, und einem Chloro-Liganden, die durch Umsetzung mit Lithium oder Magnesiumalkyl- oder -arylverbindungen unter Austausch des Chloro-Liganden in die entsprechende Alkyl- oder Arylspezies überführt werden können. Diese Komplexe sind durch Neutralliganden wie Tetrahydrofuran stabilisiert. Eine Verwendung solcher Verbindungen als Katalysatoren für die Olefinpolymerisation wird nicht beschrieben.

Die Aufgabe der vorliegenden Erfindung ist es daher eine Verbindung bereitzustellen, die es ermöglicht in Kombination mit anderen Cokatalysatoren eine höhere Polymerisationsaktivität und damit bessere Ausbeuten aufzuweisen.

Diese Aufgabe wird gelöst durch Verbindungen der Formel (I)

QL^{I} _{y}L² _{z}V(NR¹R²)ₓ (1)

worin
- V: Vanadium in der Oxidationsstufe +III oder +IV ist,
- Q: ein Ligand ist, der ausgewählt ist aus der Gruppe der einzähnigen Liganden, wobei Halogenide und Amidogruppen des Typs (NR¹R²)⁻ als einzähniger Ligand für Q ausgeschlossen sind,
- L¹ und L²gleich: oder verschieden sind und unabhängig voneinander ausgewählt sind aus der Gruppe bestehend aus einzähnigen Liganden, wobei
- y: eine ganze Zahl zwischen 0 bis 1 ist,
- z: eine ganze Zahl zwischen 0 bis 1 ist und die Summe aus x, y und z 2 ist, wenn die Oxidationsstufe des Vanadiums +III ist
und die Summe aus x, y und z 3 ist, wenn die Oxidationsstufe des Vanadiums +IV ist,
- N: Stickstoff bedeutet,
- R¹ und R²: gleich oder verschieden und unabhängig voneinander ausgewählt sind aus der Gruppe bestehend aus Alkyl-, Aryl-, Heteroaryl-, Alkenylgruppen und siliziumhaltigen Kohlenwasserstoffresten, wobei
- x: eine ganze Zahl von 1 bis 3 sein kann, wenn die Oxidationsstufe des Vanadiums +IV ist und eine ganze Zahl von 1 bis 2 sein kann, wenn die Oxidationsstufe des Vanadiumy +III ist.

### 1. Vorteilhaft sind erfindungsgemäße Verbindungen mit der Formel (II)

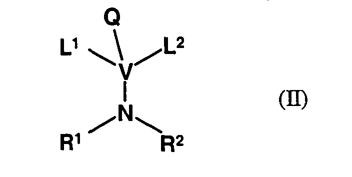

worin
- V: für Vanadium mit der Oxidationsstufe +IV steht,
- Q: ein Ligand ist, der ausgewählt ist aus der Gruppe der einzähnigen Liganden, wobei Halogenide und Amidogruppen des Typs (NR¹R²)⁻ als einzähniger Ligand für Q ausgeschlossen sind,
- L¹ und L²: gleich oder verschieden sind und unabhängig voneinander ausgewählt sind aus der Gruppe bestehend aus (NR¹R²)⁻, RO⁻, RS⁻, RCOO⁻ und Phosphoraniminatogruppen, wobei R ausgewählt ist aus der Gruppe bestehend aus Alkyl-, Alkenyl-, Cycloalkyl- und Arylgruppen,
- N: Stickstoff bedeutet und
- R¹ und R²: gleich oder verschieden sind und unabhängig voneinander ausgewählt sind aus der Gruppe bestehend aus Alkyl-, Aryl-, Heteroaryl-, Alkenylgruppen und siliziumhaltigen Kohlenwasserstoffresten.

Vorteilhaft sind erfindungsgemäße Verbindungen, wobei L¹ oder L² eine (NR¹R²)⁻ -Gruppe ist.

Vorteilhaft sind erfindungsgemäße Verbindungen, wobei L¹ und L² gleiche oder verschiedene (NR¹R²)⁻ -Gruppen sind.

Vorteilhaft sind erfindungsgemäße Verbindungen mit der Formel (III) 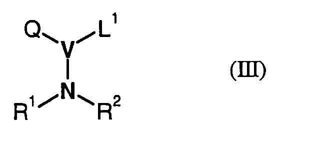 worin
- V: für Vanadium mit der Oxidationsstufe +III steht,
- Q: ein Ligand ist, der ausgewählt ist aus der Gruppe der einzähnigen Liganden, wobei Halogenide und (NR¹R²)⁻ -Gruppen als einzähniger Ligand für Q ausgeschlossen sind,
- L¹: ausgewählt ist aus der Gruppe bestehend aus (NR¹R²)⁻, RO⁻, RS⁻, RCOO⁻ und Phosphoraniminatogruppen, wobei R ausgewählt ist aus der Gruppe bestehend aus Alkyl-, Alkenyl-, Cycloalkyl- und Arylgruppen,
- N: Stickstoff bedeutet und
- R¹ und R²: gleich oder verschieden sind und unabhängig voneinander ausgewählt sind aus der Gruppe bestehend aus Alkyl-, Aryl-, Heteroaryl-, Alkenylgruppen und siliziumhaltigen Kohlenwasserstoffresten.

Vorteilhaft sind erfindungsgemäße Verbindungen, wobei L¹ eine (NR¹R²)⁻ -Gruppe ist.

Ein weiterer Gegenstand der Erfindung ist ein Verfahren zur Herstellung der Verbindungen der Formel (I), wobei [V(NMe₂)₄] mit einer oder mehreren Verbindungen, die die Liganden Q, L¹ und L² enthalten, umgesetzt wird.

Ein weiterer Gegenstand der Erfindung ist die Verwendung der erfindungsgemäßen Verbindungen zur Herstellung einer Katalysatorzusammensetzung.

Ein weiterer Gegenstand der Erfindung ist eine Katalysatorzusammensetzung enthaltend
a) eine oder mehrere erfindungsgemäße Verbindungen und
b) ein oder mehrere Cokatalysatoren.

Vorteilhaft sind in der Katalysatorzusammensetzung die Cokatalysatoren ausgewählt aus der Gruppe bestehend aus organo-metallischen Verbindungen der 1., 2., 12. oder 13. Gruppe des Periodensystems der Elemente nach IUPAC 1985.

Vorteilhaft werden Aluminiumverbindungen als Cokatalysatoren für die Katalysatorzusammensetzung verwendet, wobei diese Cokatalysatoren ausgewählt sind aus der Gruppe bestehend aus Ethylaluminiumchlorid, Ethylaluminiumsequichlorid, Diethylaluminiumchlorid oder Mischungen dieser Verbindungen.

Vorteilhaft enthält die Katalysatorzusammensetzung noch einen Promotor.

Vorteilhaft ist der Promotor der Katalysatorzusammensetzung ausgewählt aus der Gruppe bestehend aus Trichloressigsäureethylester, Dichlorphenylessigsäureethylester, Phenyldichloressigsäureethylester und/oder Diphenylchloressigsäureethylester.

Ein weiterer Gegenstand der Erfindung ist ein Verfahren zur Herstellung der Katalysatorzusammensetzung, umfassend die Schritte
α) Bereitstellung der Komponente a) und Komponente b)
β) Mischen der Komponente a) und Komponente b) in einem organischen Lösemittel.

Ein weiterer Gegenstand ist ein Verfahren zur Herstellung von Homo- oder Copolymerisaten aus einem oder mehreren Olefinen in Gegenwart der Katalysatorzusammensetzung mit der erfindungsgemäßen Verbindung.

Vorteilhaft wird die Polymerisation in Lösung durchgeführt wird.

Vorteilhaft liegt die Temperatur während der Polymerisation im Bereich von -100 bis 150 °C.

Vorteilhaft sind die Olefine für die Polymerisation ausgewählt aus der Gruppe bestehend aus α-Olefinen und Cycloolefinen.

Vorteilhaft ist bei der Copolymerisation ein Monomer immer Ethylen.

Vorteilhaft ist bei der Herstellung eines Ethylen-Propylen-Dien-Polymers mit einer Katalysatorzusammensetzung, die die erfindungsgemäße Verbindung enthält, das Dien ausgewählt aus der Gruppe bestehend aus Ethylidennorbomen, Dicyclopentadien, Vinylnorbornen oder Mischungen dieser Diene.

Die erfindungsgemäße Zusammensetzung enthält wenigstens eine Amidogruppe des Typs NR¹R². Die Reste R¹ und R² können dabei gleich oder verschieden sein und sind unabhängig voneinander ausgewählt aus der Gruppe bestehend aus Alkyl- Aryl-, Heteroaryl-, Alkoxy-, Alkenylgruppen und siliziumhaltigen Kohlenwasserstoffresten.

Die Gruppen R¹ und R² sind bevorzugt ausgewählt aus der Gruppe bestehend aus C₁₋₁₀ Alkyl-, C₅-₁₄ Cycloalkyl-, C₆-₁₄-Aryl- und C₁-₁₄-Heteroaryl-, C₁₋₁₀-Alkoxy-, C₁-₁₄ Alkenylgruppen und siliziumhaltigen Kohlenwasserstoffresten mit 1 bis 20 C-Atomen. Die Substituenten R¹ und R² können auch miteinander oder mit den Liganden L¹, L² und/oder Q verbunden sein.

Unter C₁-₁₀-Alkylgruppen werden sämtliche dem Fachmann bekannte linearen und/oder verzweigten Alkylreste mit 1 bis 10 C-Atomen verstanden, wie Methyl-, Ethyl-, n-Propyl-, i-Propyl-, n-Butyl-, i-Butyl-, t-Butyl-, n-Pentyl-, i-Pentyl-, neo-Pentyl-, Hexyl-, Heptyl-, Octyl-, Nonyl- und Decylgruppen, die ihrerseits wiederum substituiert sein können. Als Substituenten kommen hierbei Wasserstoff, Halogene, Nitro-, Hydroxylgruppen, oder auch C₁-C₁₀-Alkyl-, sowie C₅-C₁₄-Cycloalkyl- oder C₆-C₁₄-Arylgruppen wie Benzoyl, Trimethylphenyl, Ethylphenyl, Chlormethyl, Chlorethyl und Nitromethyl in Frage.

Unter C₅-C₁₄- Cycloalkylgruppen werden sämtliche dem Fachmann bekannte mono- oder polycyclische Cycloalkylreste mit 5 bis 14 C-Atomen verstanden, wie Cyclopentyl-, Cyclohexyl-, Cycloheptyl-, Cyclooctyl- und Cyclononylgruppen oder auch teil- oder vollhydrierte Fluorenylgruppen, die ihrerseits wiederum substituiert sein können. Als Substituenten kommen hierbei Wasserstoff, Halogen, Nitro-, C₁-₁₀-Alkoxygruppen oder auch C₁-₁₀-Alkyl-, sowie C₅-₁₂-Cycloalkyl- oder C₆-₁₄ -Arylgruppen wie Methylcyclohexyl, Chlorcyclohexyl und Nitrocyclohexyl in Frage.

Unter C₆-C₁₄-Arylgruppen werden sämtliche dem Fachmann bekannten mono- oder polycyclische Arylreste mit 6 bis 14 C-Atomen verstanden, wie Phenyl-, Naphthyl- und Fluorenylgruppen. Darüber hinaus kann die Arylgruppe weitere Substituenten tragen. Als Substituenten kommen hierbei Wasserstoff, Halogen, Nitro-, C₁₋₁₀-Alkoxy-, C₁-₁₀-Alkyl-, C₅-₁₄-Cycloalkyl- oder C₆-₁₄ -Arylgruppen wie Bromphenyl, Chlorphenyl, Toloyl und Nitrophenyl in Frage.

Unter C₁-₁₄-Heteroarylgruppen werden sämtliche dem Fachmann bekannten mono- oder polycyclische heterocyclischen Aromaten mit 1 bis 10 C-Atomen verstanden, wie Thiophenyl-, Pyridyl-, Furanyl-, Pyranyl-, Thiazolyl-, Pyrrolyl-, Oxazolyl-, Isoxazolyl-, Pyrazolyl-, Imidazolyl-, 1,2,3-Triazolyl- , 1,2,4-Triazolyl-, Benzofuranyl-, Thianaphthenyl-, Dibenzofuranyl-, Indolyl-, Benzimidazolyl-, Indazolyl-, Chinolyl- und Isochinolylgruppen. Darüber hinaus kann die Heteroarylgruppe weitere Substituenten tragen. Als Substituenten kommen hierbei Wasserstoff, Halogen, Nitro-, C₁₋₁₀ -Alkoxy-, C₁-₁₀-Alkyl-, C₁-C₁₀-Heteroaryl-, C₆-₁₄-Cycloalkyl- oder C₆₋₁₄-Aryl wie 2,4-Dimethyl-furan-3-yl-, N-Methyl-2-Phenyl-Pyrrol-4-ylgruppen in Frage.

Unter C₁-₁₀-Alkoxygruppen werden sämtliche dem Fachmann bekannten linearen oder verzweigten Alkoxyreste mit 1 bis 10 C-Atomen verstanden, wie Methoxy-, Ethoxy-, n-Propoxy-, i-Propoxy-, n-Butoxy-, i-Butoxy-, t-Butoxy-, n-Pentoxy-, i-Pentoxy-, neo-Pentoxy-, Hexoxy-, Heptoxy-, Octoxy-, Nonoxy- und Decoxygruppen, die ihrerseits wiederum substituiert sein können. Als Substituenten kommen C₁-C₁₀-Alkyl-, C₅-C₁₄-Cycloalkyl, C₆-C₁₄-Aryl, sowie funktionelle Gruppen wie z.B. Chlorid, Bromid, Iodid, Fluorid, Nitro- und Sulfonatgruppen in Frage.

Unter C₁-₁₄-Alkenylgruppen werden sämtliche dem Fachmann bekannten linearen oder verzweigten Alkenylreste mit 2 bis 14 C-Atomen verstanden wie Ethyliden-, Propyliden. Diese können ihrerseits wieder substituiert sein. Bevorzugte Substituenten sind C₁-C₁₀ Alkyl-, C₅-C₁₄ Cycloalkyl, C₆-C₁₄-Aryl, sowie funktionelle Gruppen wie Chlorid, Bromid, Iodid und Fluorid.

Unter siliziumhaltigen Kohlenwasserstoffresten sind alle siliziumhaltigen Reste mit 1 bis 20 C-Atomen zu verstehen. Bevorzugt sind Trimethylsilyl-, Triethylsilyl-, Triisopropylsilyl-, Triphenylsil-, Triethoxysilyl-, Trimethoxysilyl-, Tritert.butyl-, Dimethylphenylsilyl-, Mehtylditert.butylsilyl. Diese können ihrerseits wiederum Substituenten tragen. Bevorzugte Substituenten sind C₁-C₁₀ Alkyl-, C₅-C₁₄ Cycloalkyl, C₆-C₁₄-Aryl, sowie funktionelle Gruppen wie Chlorid, Bromid, Iodid und Fluorid.

Die erfindungsgemäßen Verbindungen enthalten einzähnigen Liganden L¹ und/oder L². Unter einzähnigen Liganden sind alle dem Fachmann bekannten einfach negative geladenen Liganden zu verstehen. Bevorzugt sind Halogenide, Amidogruppen des Typs (NR¹R²)-, RO⁻, RS⁻, RCOO⁻ und Phosphoraniminatogruppen des Typs (-NPX₃)⁻, wobei R ausgewählt ist aus der Gruppe bestehend aus Alkyl-, Alkenyl-, Cycloalkyl und Arylgruppen.

Besonders bevorzugte einzähnige Liganden sind Fluorid, Chlorid, Bromid, Iodid, Amidogruppen des Typs (NR¹R²)⁻, Phosphoraniminatogruppen des Typs (-NPX₃)⁻, und RO⁻ mit R ausgewählt aus der Gruppe der C₁-C₁₀ Alkyl-und C₆-C₁₄ Arylgruppen. Die Reste R¹ und R² sind dabei ausgewählt aus der Gruppe bestehend aus C₁₋₁₀ Alkyl-, C₅-₁₄ Cycloalkyl-, C₆-₁₄-Aryl- und C₁-₁₄-Heteroaryl-, C₁₋₁₀-Alkoxy-, C₁-₁₄ Alkenylgruppen und siliziumhaltigen Kohlenwasserstoffresten mit 1 bis 20 C-Atomen. Die Reste R¹ und R² können auch miteinander oder mit den Liganden L¹, L² und/oder Q verbunden sein. Für R¹ und/oder R² sind ganz besonders bevorzugt Amidogruppen des Typs NR¹R².

Unter C₆-C₁₄-Aryloxygruppen werden sämtliche dem Fachmann bekannte ein- oder mehrkernigen Oxyarylreste mit 6 bis 14 C-Atomen verstanden. Bevorzugt sind Phenolat-, Naphtholat- und Binaphtholatgruppen. Zusätzlich kann die Arylgruppe weitere Substituenten tragen. Als Substituenten kommen hierbei Wasserstoff, Halogene, Nitro-, C₁₋₁₀-Alkoxy-, C₁-₁₀-Alkyl-, C₅-₁₄-Cycloalkyl- oder C₆-₁₄-Arylgruppen in Frage. Bevorzugte sind Bromphenyl, Chlorphenyl, Toloyl und Nitrophenyl.

Unter Phosphoraniminato-Verbindungen des Typs (-NPX₃)⁻ versteht der Fachmann Verbindungen, die einzähnige einfach anionisch geladene Liganden bzw. Substituenten des Typs: 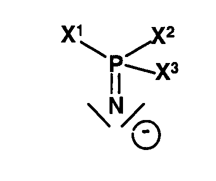 tragen, wobei X¹, X², X³ gleich oder verschieden sind und unabhängig voneinander ausgewählt sind aus der Gruppe bestehend aus C₁₋₁₀ Alkyl-, C₅-₁₄ Cycloalkyl-, C₆-₁₄ Aryl-, C₁-₁₀-Alkoxygruppen sind, die miteinander und/oder mit den anderen Liganden der Vanadium-Verbindung verbunden sein können. Ausdrücklich eingeschlossen sind auch Iminophosphorane, in denen eine oder mehrere Substituenten des Phosphors über Heteroatome wie N, O, S an Phosphor gebunden sind. Die Bindung zwischen Phosphor und dem/den Heteroatom(en) kann einfach und/oder doppelt sein; im Fall einer Doppelbindung zwischen Phosphor und Heteroatom trägt das Phosphorzentrum, neben der Imidogruppe und der über das Heteroatom gebundenen Gruppe, nur noch einen weiteren, einfach gebundenen Substituenten. Das/die Heteroatome kann/können einen oder mehrere weitere Substituenten tragen, die gleich oder verschieden sein können und unabhängig voneinander ausgewählt sind aus der Gruppe bestehend aus C₁-₁₀ Alkyl-, C₆-₁₄ Aryl-, C₁-₁₀-Alkoxygruppen. Bevorzugte Phosphoraniminato-Verbindungen sind Imino-tris(dimethylamino)-phosphoran, Imino-bis(dimethylamino)-phenyl-phosphoran, Imino-(dimethylamino)-di(n-butyl)-phosphoran, Imino-tris(N-anilino)-phosphoran, Imino-tris(methoxy)-phosphoran, Imino-di(methoxy)-(n-butyl)-phosphoran, Imino-(amino)-di(phenyl)-phosphoran.

Der Substituent Q ist ebenfalls ein einzähniger Ligand, der ausgewählt ist aus der Gruppe der einzähnigen Liganden L¹ und L², wobei für Q Halogene und Amidogruppen des Typs (NR¹R²)⁻ ausgeschlossen sind. Bevorzugte einzähnige Liganden für Q sind RO- Gruppen wobei R ausgewählt ist aus der Gruppe bestehend aus Methyl, Ethyl-, Propyl-, Isopropyl-, Butyl-, tert.Butyl, Phenyl-, 2,6 Dimethylphenyl, 2,4, 6-Trimethylphenyl, 2,6- Dibromphenyl, 2,6-Diiodphenyl, 2,6-Dichlorphenyl, 2,6-Diisopropylphenyl, 2,4,6- Tribromphenyl, 2,4,6-Trichlorphenyl, 2,4,6-Triiodphenyl, 2,4,6-Triisopropylphenyl, 2,6-Diphenylphenyl-, 3,5-Ditert.butylphenyl-, 2,4 Ditert.butylphenyl.

Das Zentralmetallion der erfindungsgemäßen Verbindung ist Vanadium in der Oxidationsstufe +III oder +IV.

Die Indices x, y, z richten sich nach der Oxidationsstufe des Vanadiums. Bevorzugt ist x = 2 für ein Vanadium mit der Oxidationsstufe +IV. Für ein Vanadium der Oxidationsstufe +III ist x bevorzugt 1.

Für Vanadium der Oxidationsstufe +IV ergeben sich Strukturen der Fromel (II)

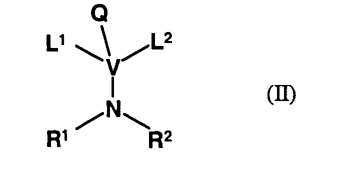

Für Vanadium der Oxidationsstufe +III ergeben sich Stukturen der Formel (III)

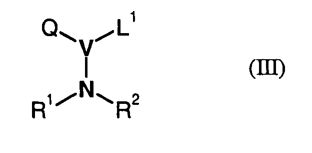

Optional können die erfindungsgemäßen Verbindungen zusätzlich noch einen oder mehrere weitere Neutralliganden wie Tetrahydrofuran, 1,2-Dimethoxyethan, Phosphine, Diphosphine, Imine, Diimine in der Koordinationssphäre des Vanadiums enthalten. Diese können gegebenenfalls auch an einen oder mehrere der Liganden Q, L¹, L², R¹ und/oder R² gebunden sein.

Ein weiterer Gegenstand der Erfindung sind Katalysatorzusammensetzungen enthaltend eine oder mehrere der erfindungsgemäßen Verbindungen und ein oder mehrere Cokatalysatoren. Unter Cokatalysator sind alle organo-metallischen Verbindungen der Gruppen 1., 2., 12. oder 13. des Periodensystems der Elemente gemäss IUPAC 1985 zu verstehen, wobei mindestens eine Kohlenwasserstoffgruppe des Cokatalysators hierbei direkt über ein Kohlenstoffatom an das Metallatom der erfindungsgemäßen Verbindung gebunden ist.

Bevorzugte organo-metallische Verbindungen sind Verbindungen des Aluminiums, Natriums, Lithiums, Zink und Magnesiums. Besonders bevorzugt sind solche des Aluminiums.

Die Kohlenwasserstoffgruppe, die an das Metallatom der erfindungsgemäßen Verbindung gebunden ist, ist vorzugsweise eine C₁-₁₀-Alkylgruppe. Bevorzugte Cokatalysatoren sind Amylnatrium, Butyllithium, Diethylzink, Butylmagnesiumchlorid, Dibutylmagnesium und Aluminiumverbindungen. Als Aluminiumverbindungen sind besonders bevorzugt Trialkylaluminiumverbindungen, Aluminoxane, Alkylaluminiumhydride, wie Diisobutylaluminiunhydrid, Alyklalkoxyaluminiumverbindungen, Alkylaryloxyaluminiumverbindungen, Aluminoxane und halogenhaltige Aluminiumverbindungen, wie Diethylaluminiumchlorid, Diisobutylaluminiumchlorid, Ethylaluminiumchlorid oder Ethylaluminiumsequichlorid in Frage. Darüber hinaus können Mischungen dieser Komponenten eingesetzt werden.

Das Mol-Verhältnis zwischen Cokatalysator und erfindungsgemäßer Verbindung kann in weiten Bereichen variiert werden. Für die Bestimmung des Mol-Verhältnisses werden die Molverhältnisse von Zentralatom des Cokatalysators zum Vanadium der erfindungsgemäßen Verbindung verwendet. Im allgemeinen wird es im Bereich von 1 zu 1 bis 5000 zu 1 variieren. Bevorzugt ist der Bereich zwischen 1 zu 1 und 500 zu 1. Ganz besonders bevorzugt ist der Bereich zwischen 2 zu 1 und 100 zu 1.

Die Zusammensetzung, die wenigstens eine erfindungsgemäße Verbindung enthält, wird durch Mischen mit einem oder mehreren Cokatalysatoren in einem organischen Lösemittel hergestellt. Unter organischem Lösemittel sind alle organischen Lösemittel zu verstehen, die 3 oder mehr Kohlenstoffatome enthalten oder Mischungen dieser Lösemittel. Bevorzugt sind Propan, Butan, Pentan, Hexan, Cyclohexan, Benzol, Toluol und Oktan.

Die Zusammensetzung eignet sich als Katalysator. Insbesondere eignet sich die Zusammensetzung als Katalysator für die Polymerisation von Olefinen, insbesondere die Ethen/Propen bzw. Ethen/α-Olefin Copolymerisation und die Terpolymerisation dieser Monomere mit Dienen.

Als bevorzugte Olefine sind zu nennen Ethen, Propen, Isobuten, 1-Buten, 2-Buten, 1-Hexen, 1-Octen, 4-Methyl-1-Penten, ungesättigten alicyclischen Verbindungen wie Cyclopenten und oder Norbornen. Für die Terpolymerisation wird als drittes Monomer neben Ethen und α-Olefinen bevorzugt Diene verwendet. Bevorzugte Diene sind 1,2-Butadien, 1,3-Butadien, Isopren, Ethylidennorbomen, Vinylnorbornen, Dicyclopentadien sowie 1,4-Hexadien.

Die Polymerisation erfolgt bevorzugt indem man die Olefine mit der Zusammensetzung, die wenigstens eine erfindungsgemäße Verbindung enthält, in einem geeignetem Lösemittel löst, gasförmig, flüssig in feiner Verteilung oder suspendiert in flüssigem Verdünnungsmittel in Kontakt bringt. Hierbei werden die Katalysatoren in der Regel in Mengen im Bereich von 10⁻¹⁰ bis 10⁻¹ mol% pro Mol Monomer (Gesamtmonomerkonzentration) eingesetzt.

Als geeignetes Lösemittel sind alle organischen Lösemittel zu verstehen. Bevorzugt sind aliphatische und aromatische Lösemittel und Suspensionsmedien mit 3 oder mehr Kohlenstoffatomen sowie Mischungen dieser Stoffe. Besonders bevorzugt sind Propan, Butan, Pentan, Hexan, Cyclohexan, Benzol, Toluol u. Oktan.

Den gasförmigen, flüssigen oder versprühten Monomeren können weitere Gase oder fein verteilte Flüssigkeiten zugemischt werden, die entweder der Verdünnung, der Versprühung oder der Wärmeabführung dienen.

Die Zusammensetzung, die wenigstens eine erfindungsgemäße Verbindung enthält, kann durch die dem Fachmann bekannte Zusätze sogenannte Promotor modifiziert werden, welche die Produktivität des Katalysators steigern und/oder die Eigenschaften des erhaltenen Polymers verändern.

Als aktivitätssteigemde Zusätze oder Promoter werden bevorzugt halogenhaltige Verbindungen, insbesondere halogenhaltige Kohlenwasserstoffe eingesetzt. Besagte Kohlenwasserstoffe können weitere Heteroatome, wie Sauerstoff, Stickstoff, Phosphor und Schwefel enthalten. Besonders bevorzugt sind Verbindungen, die wenige Halogene (1 bis 3 Atome pro Molekül) enthalten, da so die Halogenkonzentration im Polymer niedrig gehalten werden kann. Ganz besonders bevorzugt sind Alkyl- und Alkoxyalkylester der Phenylchloressigsäure, Diphenylchloressigsäure, Phenyldichloressigsäure sowie der Trichloressigsäure.

Als aktivitätssteigernde und/oder molekulargewichtsregelnde Zusätze, die ebenfalls unter dem Begriff Promoter zu verstehen sind, kommen darüber hinaus Lewis Säuren, wie AlCl₃, BCl₃ oder SiCl₄ in Frage oder Lewis Basen, wie Ester, Amine, Ammoniak, Ketone, Alkohole, Ether. Des Weiteren kann die Polymerisation in Gegenwart von Wasserstoff erfolgen.

Ausdrücklich werden auch Mischungen der genannten aktivitätssteigernden Zusätze genannt.

Es kann vorteilhaft sein, die Zusammensetzung, die wenigstens eine erfindungsgemäße Verbindung enthält, als Katalysatorsystem auf einen Träger aufzubringen.

Als Trägermaterialien werden bevorzugt teilchenförmige, organische oder anorganische Feststoffe, deren Porenvolumen zwischen 0,1 und 15 ml/g beträgt, bevorzugt zwischen 0,25 und 5 ml/g, deren spezifische Oberfläche größer als 1 ist, bevorzugt 10 bis 1000 m²/g (BET), deren Korngröße zwischen 10 und 2500 µm beträgt, bevorzugt zwischen 50 und 1000 µm, und die an ihrer Oberfläche in geeigneter Weise modifiziert sein können, eingesetzt.

Die spezifische Oberfläche wird in üblicher Weise bestimmt gemäss DIN 66 131, das Porenvolumen durch die Zentrifugationsmethode nach McDaniel in J. Colloid Interface Sci. 1980, 78, 31 und die Teilchengröße nach Cornillaut in Appl. Opt. 1972, 11, 265 beschrieben.

Als geeignete anorganische Feststoffe seien bevorzugt Silicagele, Fällungskieselsäuren, Tone, Alumosilikate, Talkum, Zeolithe, Ruß, anorganische Oxide, wie Siliciumdioxid, Aluminiumoxid, Magnesiumoxid, Titandioxid, anorganische Chloride, wie Magnesiumchlorid, Natriumchlorid, Lithiumchlorid, Calciumchlorid, Zinkchlorid, oder Calciumcarbonat genannt. Die genannten, anorganischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 21, S. 439-483 (Silicagele), Band 23, S. 311-331 (Tone), Band 14, S. 633-651 (Ruße) und Band 24, S. 575-578 (Zeolithe).

Als organische Feststoffe eignen sich pulverförmige, polymere Materialien, bevorzugt in Form frei fließender Pulver, mit den obengenannten Eigenschaften. Beispielhaft seien genannt, ohne die vorliegende Erfindung einschränken zu wollen: Polyolefine, wie Polyethen, Polypropen, Polystyrol, Polystyrol-*co*-divinylbenzol, Polybutadien, Polyether, wie Polyethylenoxid, Polyoxytetramethylen oder Polysulfide, wie Poly-*p*-phenylensulfid. Besonders geeignete Materialien sind Polypropylen, Polystyrol oder Polystyrol-*co*-divinylbenzol. Die genannten organischen Feststoffe, die der obengenannten Spezifikation genügen und deshalb für die Verwendung als Trägermaterialien besonders geeignet sind, werden beispielsweise näher beschrieben in Ullmanns Enzyklopädie der technischen Chemie, Band 19, S. 195-210 (Polypropylen), und Band 19, S. 265-295 (Polystyrol).

Die Herstellung des geträgerten Katalysatorsystems kann in einem weiten Temperaturbereich erfolgen. Im allgemeinen liegt die Temperatur zwischen Schmelz- und Siedepunkt des inerten Lösungsmittelgemisches. Üblicherweise liegt die Temperaturuntergrenze bei -50, bevorzugt - 20°C, ganz besonders bevorzugt bei +20°C und die Temperaturobergrenze liegt bei +200°C, bevorzugt +100°, ganz besonders bevorzugt bei +60°C.

### Beispiele:

Alle im Folgenden aufgeführten Synthesen wurden unter Ar-Atmosphäre ausgeführt.

### Beispiel 1:

### Synthese von [V(N(CH₃)₂)₄] (Katalysator 1: Vergleichsbeispiel)

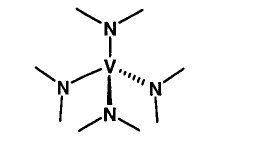

Bei 0°C wurden 20g Vanadiumoxytrichlorid VOCl₃, gelöst in 50ml Hexan durch einen Tropftrichter zu einer Suspension von 30,8g Lithiumdimethylamid LiN(CH₃)₂ in 200ml Hexan getropft. Hierbei wurden die ersten 3ml schnell zugegeben, anschließend wurde die Tropfgeschwindigkeit möglichst niedrig gehalten um ein Erwärmen auf >10°C zu vermeiden. Nach vollständiger Zugabe der VOCl₃-Lösung wurde die grüne Suspension auf Raumtemperatur erwärmt, 1h gerührt und anschließend 4h unter Rückfluss gekocht. Der Ansatz wurde abgekühlt und die Li-Salze abfiltriert. Anschließend wurde das Lösungsmittel bei 4*10⁻² bar abdestilliert. Das Produkt wurde durch Sublimation bei maximal 80°C und 2*10⁻⁴ bar gereinigt.
Ausbeute: 24,3 g (92%)
Schmelzpunkt: 112°C (Zersetzung)
C₈H₂₄N₄V (227,25 g/mol): C: 44,22 (ber.:42.26); H:9,98 (ber.: 10,65); N: 23,87 (ber.:24,66)

### Synthese von Me₃SiNP(tBu)₃ (in Anlehnung an H. Schmidbaur, G. Blaschke, Z. Naturforsch. 1978, 33b, 1556-1559)

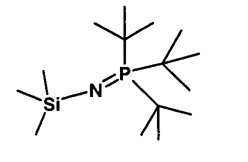

Zu einer Mischung von 80,8g Tri(tert.butyl)phosphin und 0,8g wasserfreiem Aluminiumtrichlorid wurden bei 140°C durch einen Tropftrichter 57,6ml Trimethylsilylazid unter Rühren zugetropft. Die Tropfgeschwindigkeit wird so geregelt, dass die Innentemperatur 170°C nicht übersteigt und eine kontrollierte Stickstoffentwicklung zu beobachten ist. Nach vollständiger Zugabe des Azids wird die leicht gelbliche Schmelze erwärmt und 8h unter Rückfluss gekocht. Anschließend wird bei 100°C und 6*10⁻² bar sublimiert. Das Produkt fällt in Form farbloser Nadeln an.
Ausbeute: 112,7g (97%)
Schmelzpunkt: 132°C
¹H-NMR (200MHz, CDCl₃): δ = 0,02 (s, 9 H, Si(CH₃)₃), 1,21 (d, ³J_{PH}= 12,7Hz, 27H,C(CH₃)₃) ppm.
¹³C-NMR (50 MHz, CDCl₃): δ = 27,3 (C(CH₃ )₃), 46,2 (d, ²J_{PC}= 42,2Hz, PC(CH₃)₃)
³¹P-NMR (81 MHz, CDCl₃): 29,3 ppm

### Synthese von [V(NP(tBu)₃)Cl₃]₂

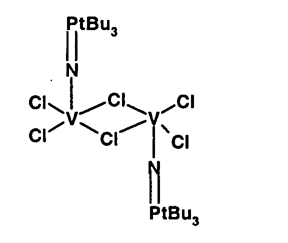

Eine Lösung von 1,0g Me₃SiNP(tBu)₃ in 5ml Toluol wurde unter Rühren und Kühlen im Eisbad (0°C) mit 0,67g VCl₄ in 20 ml Toluol unter Lichtausschluss versetzt. Das schwarze Reaktionsgemisch wurde 2 h bei 0°C gerührt und dann innerhalb von 30 Minuten auf Raumtemperatur erwärmt. Es bildete sich eine rotbraune Suspension, die filtriert wird. Das lichtempfindliche rotbraune Pulver wird durch Filtration abgetrennt und im Vakuum getrocknet.
Ausbeute: 610 mg (54%)
Schmelzpunkt: 147°C (Zersetzung)
C₂₄H₅₄Cl₆N₂P₂V₂ (764,24 g/mol)
IR (Nujol) ν[cm⁻¹]: 2073w, 1379m, 1261m, 1240w, 1049m, 970s, 939m, 825m, 746m, 671m, 644s, 553m
ESI-MS m/z: 373 (C₁₂H₂₇Cl₃NPV⁺), 217, 147, 93, 41

### Synthese von HNP(tBu)₃ (in Anlehnung an H. Schmidbaur, G. Blaschke, Z. Naturforsch. 33b (1978) 1556-1559)

30 g ^{*t*}Bu₃PN-SiMe₃ werden mit 25 ml Toluol und mit 50 ml Methanol sowie mit einem Tropfen H₂SO₄ (konz.) versetzt. Die Reaktionslösung wird 36 h bei 60°C gerührt. Nachdem das Signal δ_{P} = 34 dem neuen Signal δ_{P} = 59 vollständig gewichen ist (³¹P-NMR-Kontrolle aus der Reaktionslösung), wird das Lösungsmittel vollständig abgedampft und der zurückgebliebene weiße Rückstand mit heißem Pentan extrahiert. Das Produkt wird aus dem eingeengten Pentan-Extrakt bei -80°C kristallisiert.
Ausbeute: 19,82 g (88%) weißer Feststoff
¹H-NMR (200.1 MHz, C₆D₆): δ = 1,20 (d, ³J_{P-H} = 12,3 Hz, 27H, PC(CH₃)₃) ppm.
¹³C-NMR (50.3 MHz, C₆D₆): δ = 29,6 (s, C(CH₃)₃), 39.2 (d, ¹J_{P-C} = 45.4 Hz, PCMe₃) ppm.
³¹P-NMR (81,0 MHz, C₆D₆): δ = 57,6 (s, N*P*^{*t*}Bu₃) ppm.

### Synthese von LiNP(tBu)₃:

2,17g HNP(tBu)₃ werden in 30ml Hexan gelöst. Bei 0°C werden 10ml einer Lösung von nBuLi (1 M in Hexan) innerhalb von 3 Minuten dazu gegeben. Die Mischung wird auf 25°C erwärmt und das Lösungsmittel nach 30 Minuten vollständig abgedampft. Der farblose, luftempfmdliche Rückstand wird mit Pentan gewaschen und im Vakuum getrocknet.
Ausbeute quantitativ, Zwischenprodukt eingesetzt wie erhalten.

### Synthese von [V(NP(tBu)₃)₂Cl₂] (Katalysator 2: Vergleichsbeispiel)

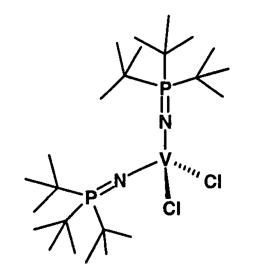

Auf 446mg Li(NP(tBu)₃) und 373mg [V(NP(tBu)₃)Cl₃]₂ wurden unter Kühlen mit flüssigem N₂ 20ml Argon kondensiert. Anschließend wurden langsam 20ml Toluol zugetropft. Das Reaktionsgemisch wurde abgedunkelt und bei 0°C 5h gerührt und anschließend auf Raumtemperatur erwärmt. Es bildete sich eine rotbraune Lösung mit suspendiertem Feststoffanteil. Der Feststoff wird abfiltriert und das Filtrat im Vakuum zur Trockene eingeengt. Das Produkt wird als rotbrauner Feststoff erhalten.
Ausbeute: 391mg (36%)
Schmelzpunkt: 78°C (Zersetzung)
C₂₄H₅₄Cl₂N₂P₂V (554.50 g/mol): C: 49,33 (ber.: 51,99); H: 5,43 (ber.: 5,05); N: 10,16 (ber.:9,82)
IR (Nujol) ν[cm⁻¹]: 2671w, 1305m, 1259m, 1182s, 1026m, 848m, 798s, 725s, 688m, 617m, 593m.
EI-MS m/z: 554 (M+), 373, 218, 147, 93, 41.

### Synthese von [V(NP(tBu)₃)₂(NMe₂)₂] (Katalysator 3)

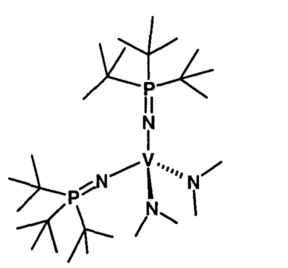

Bei 0°C wurden 300mg [V(NMe₂)₄] mit 574mg HNP(tBu)₃ in 15 ml Hexan umgesetzt. Nach 1h wurde die grüne Lösung auf Raumtemperatur erwärmt und anschließend das Lösungsmittel im Vakuum abdestilliert. Der grüne Feststoff wurde in 4ml Hexan aufgenommen und aus dieser Lösung binnen 48h bei -20°C kristallisiert. Die schuppenartigen Kristalle wurden abfiltriert und im Vakuum getrocknet.
Ausbeute: 423mg (74%)
Schmelzpunkt: 112°C
C₂₈H₆₆N₄P₂V (571 g/mol): C: 55,21 (ber. 58,82); H: 10,82 (ber.:11,64); N: 9.05 (ber.:9,80)
IR (Nujol) ν[cm⁻¹]: 2751s, 1386m, 1356s, 1205s, 1143s, 951m, 806s, 576m, 494s
EI-MS m/z: 218, 161, 104, 57, 48

### Synthese von [V(NP(Ph)₃)₂(NMe₂)₂](Katalysator 4)

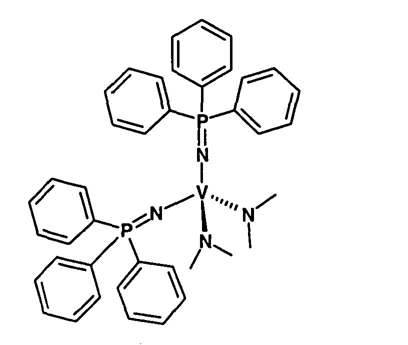

Zu einem Gemisch von 100mg [V(NMe₂)₄] und 244mg Ph₃PNH wurden unter Kühlung mit flüssigem N₂ 20ml Argon einkondensiert. Anschließend wurden 30ml Hexan zugesetzt, wobei das Argon entwich und eine tiefgrüne Lösung entstand. Es wurde 2h bei Raumtemperatur gerührt und anschließend 4h unter Rückfluss gekocht. Nach Einengen auf ein Volumen von 3ml wurde auf - 18°C abgekühlt. Ein tiefgrüner Feststoff fiel aus und wurde abfiltriert.
Ausbeute: 237mg (78%)
Schmelzpunkt: 132°C
C₄₀H₄₂N₄P₂V (691,69 g/mol): C:67,22 (ber.:69,46); H:5,88 (Ber.:6,12); N: 8,20 (ber.:8,10)
IR (Nujol) ν[cm⁻¹]: 2926s, 2855s, 2359m, 1462s, 1377m, 1261s, 1111s, 804s, 622m, 534m, 411s
EI-MS m/z: 691 (M+), 277, 262, 201, 185, 108, 45

### Synthese von [V(-O-2,4,6-C₆H₂I₃)₂(NMe₂)₂] (Katalysator 5)

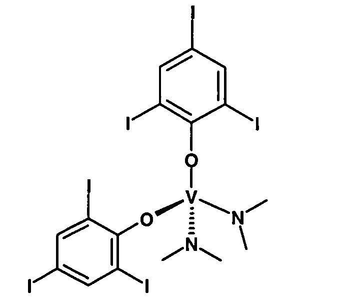

Bei -10°C wurden unter Lichtausschluss 300mg [V(NMe₂)₄] mit 1,37g 2,4,6-Triiodphenol in 15ml Hexan umgesetzt. Es wurde 3h bei -10°C gerührt und dann auf Raumtemperatur erwärmt. Anschließend wird filtriert und das Filtrat im Vakuum vom Lösungsmittel befreit. Der so erhaltene rote Feststoff wurde in 2ml Hexan aufgenommen und die Lösung 48h bei -83°C gelagert. Der ausgefallene Feststoff wurde abfiltriert und im Vakuum getrocknet.
Ausbeute: 883mg (62%)
Schmelzpunkt: 140°C (Zersetzung)
C₁₆H₁₆I₆N₂O₂V (1080,68 g/mol): C: 18,43 (ber.:17,77); H: 1,83 (ber.:1,43); N: 2,67 (ber.:2,59)
IR (Nujol) ν[cm⁻¹]: 2854, 1462w, 1413m, 1240s, 1143, 1037w, 950m, 871m, 856m, 798m, 455s
EI-MS m/z: 472.5, 345, 218, 91, 63,45

### Synthese von [V(-O-2,4,6-C₆H₂I₃)₃(NMe₂)] (Katalysator 6)

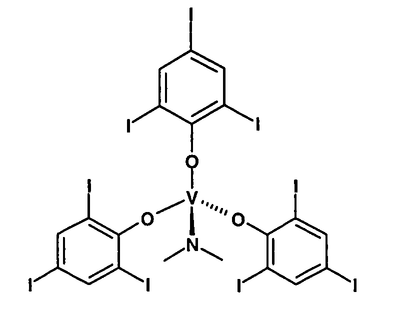

Bei -20°C wurden unter Lichtausschluss 300mg [V(NMe₂)₄] und 2,05g 2,4,6-Triiodphenol in 30ml Hexan umgesetzt. Es wurde auf Raumtemperatur erwärmt und 24h gerührt. Der erhaltene, rote Feststoff wird abfiltriert und aus heißem Benzol umkristallisiert.
Ausbeute: 1,51g (78%)
Schmelzpunkt: 143 °C (Zersetzung)
C20H12I9NO3V: C: 17,11 (ber.: 16,94); H: 1.21 (ber.:0,83); N: 0.78 (ber.:0,93)
IR (Nujol) ν [cm⁻¹]: 2768, 2361w, 2341w, 1504w, 1205s, 1037w, 951m, 847m, 723m, 453s
EI-MS m/z: 472.5, 345, 218, 91, 63, 45

### Synthese von [V(-O-2,6-iPr₂(C₆H₃))₂(NMe₂)₂] (Katalysator 7)

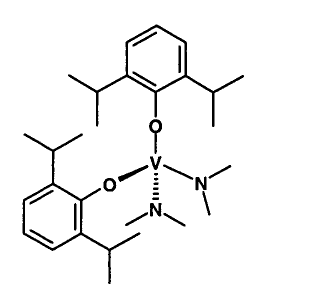

300mg [V(NMe₂)₄] wurden in 30ml Hexan gelöst und bei -20°C mit 520mg 2,6-Diisopropylphenol in 15ml Hexan versetzt. Es wurde auf Raumtemperatur erwärmt und filtriert. Das Filtrat wurde auf 5ml eingeengt und 48h bei -83°C gelagert. Der hierbei ausfallende rote, mikrokristalline Feststoff wird abfiltriert und im Vakuum getrocknet.
Ausbeute: 384mg (78%)
Schmelzpunkt: 126°C
IR (Nujol) ν[cm⁻¹]: 2854, 1547w, 1362m, 1238s, 1201m, 1020w, 949m, 912m, 868s, 794m, 722m, 606s

### Synthese von [V(-O-2,6-iPr₂(C₆H₃))₃(NMe₂)] (Katalysator 8)

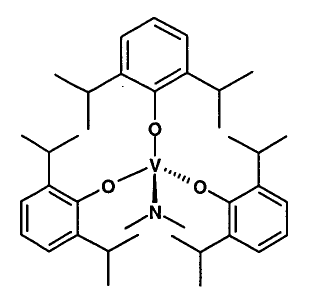

Zu einer Lösung von 104mg [V(NMe₂)₄] in 30ml Hexan wurden bei 0°C 245mg 2,6-Diisopropylphenol gegeben. Es wurde 2h bei 0°C und anschließend 2h bei Raumtemperatur gerührt. Es wurde filtriert und das Filtrat im Vakuum vom Lösungsmittel befreit. Es verbleibt ein rotbrauner Feststoff.
Ausbeute: 232 mg (81%)
Schmelzpunkt: 128°C, C₃₈H₅₇NO₃V (626,82 g/mol): C: 70,81 (ber.:72,82); H: 9.47 (ber.:9,17), N: 2,73 (ber.:2,23)
IR (Nujol) ν[cm⁻¹]: 2922vs, 2854w, 2361vw, 2340w, 1585s, 1460w, 1433s, 1378s, 1325m, 1255m, 1194m, 1110w, 1042vw, 948w, 897m, 873w, 848w, 795w, 751m, 715w, 612vw
FD-MS m/z: 627(M+), 599, 512, 45

### Synthese von [V(-O-2,6-Ph₂(C₆H₃))(NMe₂)₃](Katalysator 9)

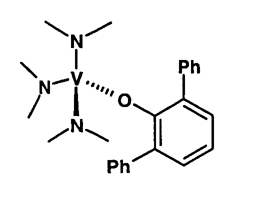

Unter Lichtausschluss wurden bei -20°C 300mg [V(NMe₂)₄] mit 358mg 2,6-Diphenylphenol in 10ml Hexan umgesetzt. Das Reaktionsgemisch wurde anschließend auf 40°C erwärmt und warm filtriert. Das Filtrat wurde auf 2ml eingeengt und anschließend wurde der ausgefallene braune Feststoff abfiltriert und im Vakuum getrocknet.
Ausbeute: 421 mg (74%)
Schmelzpunkt: 128°C (Zersetzung)
C₂₄H₃₁N₃OV (428,47 g/mol): C: 66,23 (ber.:67,28); H: 7,01 (ber.:7,29); N: 9,40 (ber.:9,81)
IR (Nujol) ν[cm⁻¹]: 2361m, 1564m, 1261m, 1220, 1083m, 968m, 949m, 887m, 756s, 746m, 700s, 623m
EI-MS m/z: 246, 227, 226, 217, 215, 202, 57, 45

### Synthese von [V(-O-2,6-Ph₂(C₆H₃))₂(NMe₂)₂] (Katalysator 10)

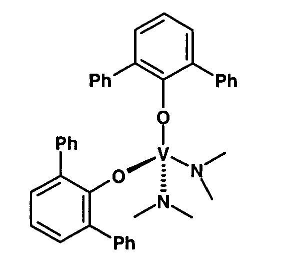

Unter Lichtausschluss wurden bei -20°C 300mg [V(NMe₂)₄] mit 719g 2,6-Diphenylphenol in 10ml Hexan umgesetzt. Das Reaktionsgemisch wurde anschließend auf 40°C erwärmt und warm filtriert. Das Filtrat wurde im Vakuum zur Trockene eingeengt, der Rückstand mit 3 ml Pentan versetzt, die Verbindung bei -80°C kristallisiert und von der Mutterlauge getrennt.
Ausbeute: 666 mg (81%) brauner Feststoff.
Schmelzpunkt: 141°C
C₄₀H₃₂N₂O₂V (623,65 g/mol): C: 75,60 (ber.:77,04); H: 5,59 (ber.:5,17); N: 4,11 (ber.:4,49)
IR (Nujol) ν[cm⁻¹]: 2361m, 1597m, 1579m, 1671m, 1278m, 1240s, 1086m, 1070m, 949m, 887m, 862m, 756s, 746m, 700s, 632m
EI-MS m/z: 246, 227, 226, 217, 215, 202, 57, 45

### Synthese von [V(-O-2,6-Ph₂(C₆H₃))₃(NMe₂)] (Katalysator 11)

Unter Lichtausschluss wurden bei -20°C 300mg [V(NMe₂)₄] mit 1073mg 2,6-Diphenylphenol in 10ml Hexan umgesetzt. Das Reaktionsgemisch wurde anschließend auf 40°C erwärmt und warm filtriert. Das Filtrat wurde im Vakuum zur Trockene eingeengt, der Rückstand mit 3 ml Pentan versetzt, die Verbindung bei -80°C kristallisiert und von der Mutterlauge getrennt.
Ausbeute: 780 mg (74%) brauner Feststoff
Schmelzpunkt: 143°C
C₅₆H₄₅NO₃V (623,65 g/mol): C: 80,20 (ber.:80,95); H: 5,59 (ber.:5,46); N: 1,41 (ber.:1,69)
IR (Nujol) ν[cm⁻¹]: 2853m, 1460m, 1371m, 1261m, 1085m, 1024s, 874m, 843m, 802m, 755m, 722m, 703m
FD-MS m/z: 826 (M+), 246, 46

### Synthese von [V(-O-2,4-tBu₂(C₆H₃))₂(NMe₂)₂] (Katalysator 12)

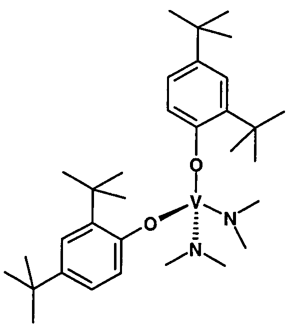

Bei Raumtemperatur wurden unter Lichtausschluss 300mg [V(NMe₂)₄] mit 597mg 2,4-Di(tert.butyl)phenol in 10ml Hexan umgesetzt. Anschließend wurde 3h unter Rückfluss gekocht, wobei sich eine tiefrote Lösung bildete. Die Lösung wurde heiß filtriert und anschließend im Vakuum vom Lösungsmittel befreit. Es wurde ein bronzefarbener, mikrokristalliner Feststoff erhalten.
Ausbeute: 442mg (62%)
Schmelzpunkt: 162°C
C₃₂H₅₄N₂O₂V (549,73 g/mol): C: 67,91 (ber.: 69,92); H: 9,60 (ber.:9,90); N: 5,74 (ber.:5,10)
IR (Nujol) ν[cm⁻¹]: 2361m, 2341m, 1529w, 1485vs, 1377m, 1361s, 1238s, 1103m, 1087s, 912m, 844s
EI-MS: 206, 191, 163, 57, 45

### Synthese von [V{3,3',3'',3'''-(CF₃)C₆H₆)₄C₂H₂O₂}(NMe₂)₂] (Katalysator 13)

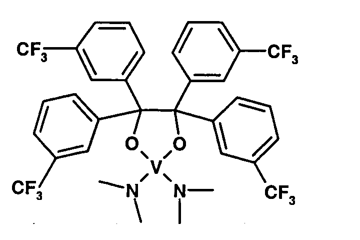

Bei -30°C wurden 300mg [V(NMe₂)₄] mit 0,92g 3,3',3'',3'''-Tetrakis(trifluormethyl)benzopinakol in 10ml Hexan umgesetzt. Nach 2h wurde auf 40°C erwärmt bis sich eine tiefblaue Lösung bildete. Anschließend wurde das Lösungsmittel im Vakuum abdestilliert und das blaue Produkt in 20ml Toluol aufgenommen. Bei -20°C fiel nach 24h das Produkt als rotbrauner Feststoff aus.
Ausbeute: 654mg (64%)
Schmelzpunkt: 171°C
C₃₄H₂₈F₁₂N₂O₂V: C: 51,31 (ber.: 52,64); H: 3,41 (ber.:3,64); N: 3,11 (ber.: 3,61)
IR (Nujol) ν[cm⁻¹]: 3753 w, 2723w, 2172m, 1512m, 1291s, 1173s, 1071w, 803m, 768m
EI-MS m/z: 775 (M+), 634

### Synthese von [V(3,5-tBu₂C₆H₂O₂)(NMe₂)₂] (Katalysator 14)

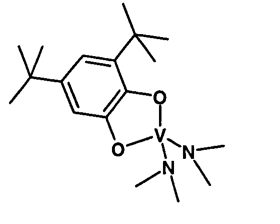

Bei -30°C wurden 300mg [V(NMe₂)₄] mit 320mg 3,5-Di(tert.butyl)*ortho*chinon in 10ml Hexan umgesetzt. Nach 2h wurde auf 60°C erwärmt und anschließend heiß filtriert. Das Filtrat wurde im Vakuum auf 3ml eingeengt. Nach 48h bei -48°C fiel ein dunkelblauer Feststoff aus, der abfiltriert und getrocknet wurde.
Ausbeute: 330mg (64%)
Schmelzpunkt: 171°C
C₂₀H₂₆N₂O₂V (377,14 g/mol): C: 63,30 (ber.:63,64); H: 8,84 (ber.: 6,95); N: 6,50 (ber.: 7,43)
IR (Nujol) ν[cm⁻¹]: 2329w, 1589m, 1377s, 1261s, 1093w, 1026m, 987s, 918m

### Synthese von [V(-O-2,6-Cl₂(C₆H₃))₂(NMe₂)₂] (Katalysator 15)

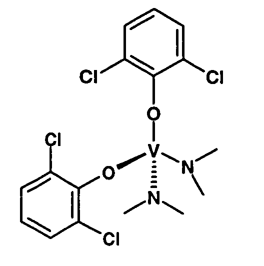

Unter Lichtausschluss wurden bei -20°C 300mg [V(NMe₂)₄] mit 420mg 2,6-Dichlorphenol in 10ml Hexan umgesetzt. Das Reaktionsgemisch wurde anschließend auf 40°C erwärmt und nach weiteren 3h bei 40°C filtriert. Das Filtrat wurde im Vakuum zur Trockene eingeengt, der Rückstand mit 3 ml Pentan versetzt, die Verbindung bei -80°C kristallisiert und von der Mutterlauge getrennt.
Ausbeute: 465 mg (76%) brauner Feststoff.
Zers. > 130°C
C₁₆H₁₈Cl₄N₂O₂V (462,90 g/mol): C: 42,13 (ber.:41,48); H: 4,22 (ber.:3,89); N: 5,91 (ber.:6,05)
FD-MS (Toluol) m/z: 463 (M⁺)

### Ethen/Propen Copolymerisation

Die mit einem Thermostaten auf 40 °C temperierte Apparatur wird 30 min auf 5 * 10⁻² bar evakuiert. Danach wird bis zu einem Druck von 1,5 bar nachgereinigtes Propen aufgepresst. Im Propengegenstrom werden 40 ml absolutiertes Hexan und 0,408 mmol (18,5 eq) einer 15 %igen Lösung von Ethylaluminiumsesquichlorid in Heptan in den Autoklav gegeben. Anschließend wird die Apparatur unter Propenatmosphäre verschlossen, um im Propengegenstrom eine Druckspritze mit 50 ml Hexan und 0,096 mmol (4,4 eq) Dichlorphenylessigsäureethylester zu befüllen.

Darauf werden 0,022 mmol (1,0 eq) der in 30 ml Hexan gelösten Vanadiumprecursorverbindung in das Rührgefäß gegeben. Die Hexanlösung wird 15 min mit Propen bei 3,7 bar gesättigt. Nach Verschließen der Propenzufuhr wird der Gesamtdruck mit nachgereinigtem Ethen auf 5,5 bar eingestellt. Die Reaktion wird bei 40°C durch Injektion des Reaktivators mit der Druckspritze gestartet. Es wird unter konstantem Ethendruck bei 5,5 bar und mit 1000 U/min mit einen Ankerrührer gerührt.

Nach 10 min wird die Reaktion durch Eintropfen des Gemisches in salzsaures Methanol beendet. Nach Waschen des Polymerniederschlags mit Ethanol wird dieser 10 h bei 50 °C getrocknet und die Ausbeute bestimmt.

**Tabelle 1:**

| **Ergebnisse der Ethen/Propen Copolymerisation durch Vanadium- Katalysatoren.** | | |
|---|---|---|
| Katalysator | Ausbeute [g] | Tmax*) [°C] |
| VCl₄ | 4.1 | 59 |
| Katalysator 1 | 4.5 | 52 |
| Katalysator 2 | 5.7 | 58 |
| Katalysator 3 | 16.7 | 52 |
| Katalysator 5 | 6.5 | 53 |
| Katalysator 6 | 8.2 | 52 |
| Katalysator 8 | 9.5 | 50 |
| Katalysator 9 | 7.9 | 57 |
| Katalysator 10 | 7.3 | 54 |
| Katalysator 11 | 4.3 | 52 |
| Katalysator 12 | 10.2 | 51 |
| Katalysator 13 | 5.9 | 52 |

| | | |
|---|---|---|
| *) die Reaktion ist exotherm und heizt den Ansatz auf, angegeben ist die maximale Reaktionstemperatur | | |

Der Vergleich der in Tabelle 1 dargestellten Polymerisationsergebnisse zeigt deutlich, das durch geeignete Wahl der Liganden die Polymerisationsaktivität der neuen Katalysatorsysteme über der bekannter Systeme wie VCl₄, Katalysator 1 liegt. Der positive Effekt den der Austausch von Chloro-Liganden gegen Amido-Liganden bringt ist deutlich beim Vergleich von Katalysator 2 und 3 zu erkennen.

### EPDM-Synthese

Ein inertisierter Autoklav wird mit 1500ml Hexan und 6,0g Ethylidennorbornen gefüllt und auf die Polymerisationstemperatur von 40°C aufgeheizt. Dann werden Ethen und Propen im Verhältnis 1 : 19 bis zu einem Druck von 7 bar aufgepresst. Die Katalysatorkomponenten (0,05 mmol V-Komponente, 1mmol Ethylaluminiumsequichlorid und 0,25 mmol Dichlorphenylessigsäureethylester) werden über Druckbüretten zeitgleich in den Reaktor gegeben und dann wird bei einem Druck von 7,0 bar polymerisiert. Die Regelung erfolgt durch Dosierung von Ethen. Nach einer halben Stunde wird der Versuch beendet und der Ansatz in einen mit Ethanol gefüllten Behälter überführt. Das Polymer wird bei 80°C im Vakuumtrockenschrank getrocknet.

| **Tabelle 2: Ergebnisse der Ethen/Propen/Ethylidennorbornen Terpolymerisation durch Vanadium-Katalysatoren.** | | | | | | | |
|---|---|---|---|---|---|---|---|
| Katalysator | Ausbeute [g] | E [wt%] | P [wt%] | ENB [wt%] | Tg [°C] | M_{w} | M_{w}/Mₙ |
| O=VCl₃ | 22,4 | 45,8 | 43,1 | 11,1 | -43 | | |
| Katalysator 12 | 36,0 | 49,8 | 41,2 | 9,0 | -47 | 225000 | 1,7 |
| Katalysator 14 | 26,8 | 48,0 | 41,2 | 10,8 | -45 | 208000 | 1,8 |
| Katalysator 15 | 25,2 | 51,3 | 38,2 | 10,6 | -46 | 233000 | 1,6 |

Wie Tabelle 2 zeigt, weisen alle 3 getesteten Katalysatoren eine deutlich gesteigerte Polymerisationsaktivität bei der Ethen/Propen/Ethylidennorbornenpolymerisation auf. Auch zeigen die Polymere eine leicht veränderte Mikrostruktur und daraus resultierend tiefere Glasübergangstemperaturen.

## Patentansprüche

1. Verbindungen der Formel (I)
QL¹ _{y}L² _{z}V(NR¹R²)ₓ (I)
worin
V Vanadium in der Oxidationsstufe +III oder +IV ist,
Q ein Ligand ist, der ausgewählt ist aus der Gruppe der einzähnigen Liganden, wobei Halogenide und Amidogruppen des Typs (NR¹R²)⁻ als einzähniger Ligand für Q ausgeschlossen sind,
L¹ und L²gleich oder verschieden sind und unabhängig voneinander ausgewählt sind aus der Gruppe bestehend aus einzähnigen Liganden, wobei
y eine ganze Zahl zwischen 0 bis 1 ist,
z eine ganze Zahl zwischen 0 bis 1 ist und die Summe aus x, y und z 2 ist, wenn die Oxidationsstufe des Vanadiums +III ist
und die Summe aus x, y und z 3 ist, wenn die Oxidationsstufe des Vanadiums +IV ist,
N Stickstoff bedeutet,
R¹ und R² gleich oder verschieden und unabhängig voneinander ausgewählt sind aus der Gruppe bestehend aus Alkyl-, Aryl-, Heteroaryl-, Alkenylgruppen und siliziumhaltigen Kohlenwasserstoffresten, wobei
x eine ganze Zahl von 1 bis 3 sein kann, wenn die Oxidationsstufe des Vanadiums +IV ist und eine ganze Zahl von 1 bis 2 sein kann, wenn die Oxidationsstufe des Vanadiums +III ist.

2. Verbindungen nach Anspruch 1, mit der Formel (II) 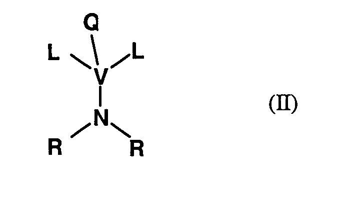 worin
V für Vanadium mit der Oxidationsstufe +IV steht,
Q ein Ligand ist, der ausgewählt ist aus der Gruppe der einzähnigen Liganden, wobei Halogenide und Amidogruppen des Typs (NR¹R²)⁻ als einzähniger Ligand für Q ausgeschlossen sind,
L¹ und L² gleich oder verschieden sind und unabhängig voneinander ausgewählt sind aus der Gruppe bestehend aus (NR¹R²)⁻ , RO⁻, RS⁻, RCOO⁻ und Phosphoraniminatogruppen, wobei R ausgewählt ist aus der Gruppe bestehend aus Alkyl-, Alkenyl-, Cycloalkyl- und Arylgruppen,
N Stickstoff bedeutet und
R¹ und R² gleich oder verschieden sind und unabhängig voneinander ausgewählt sind aus der Gruppe bestehend aus Alkyl-, Aryl-, Heteroaryl-, Alkenylgruppen und siliziumhaltigen Kohlenwasserstoffresten.

3. Verbindungen nach einem der Ansprüche 1 oder 2, wobei L¹ oder L² eine (NR¹R²)⁻ Gruppe ist.

4. Verbindungen nach einem der Ansprüche 1 bis 3, wobei L¹ und L² gleiche oder verschiedene (NR¹R²)⁻ Gruppen sind.

5. Verbindungen nach Anspruch 1, mit der Formel (III) 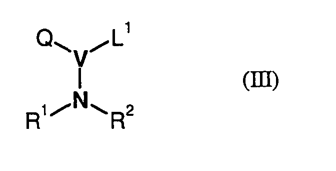 worin
V für Vanadium mit der Oxidationsstufe +III steht,
Q ein Ligand ist, der ausgewählt ist aus der Gruppe der einzähnigen Liganden, wobei Halogenide und Amidogruppen des Typs (NR¹R²)⁻ als einzähniger Ligand für Q ausgeschlossen sind,
L¹ ausgewählt ist aus der Gruppe bestehend aus (NR¹R²)⁻ , RO⁻, RS⁻, RCOO⁻ und Phosphoraniminatogruppen, wobei R ausgewählt ist aus der Gruppe bestehend aus Alkyl-, Alkenyl-, Cycloalkyl- und Arylgruppen,
N Stickstoff bedeutet und
R¹ und R² gleich oder verschieden sind und unabhängig voneinander ausgewählt sind aus der Gruppe bestehend aus Alkyl-, Aryl-, Heteroaryl-, Alkenylgruppen und siliziumhaltigen Kohlenwasserstoffresten.

6. Verbindungen nach einem der Ansprüche 1 oder 5, wobei L¹ eine (NR¹R²)⁻ Gruppe ist.

7. Ein Verfahren zur Herstellung der Verbindungen der Formel (I), wobei [V(NMe₂)₄] umgesetzt wird mit einer oder mehreren Verbindungen, die die Liganden Q, L¹ und L² enthalten.

8. Verwendung der Verbindungen nach einem der Ansprüche 1 bis 6 zur Herstellung einer Katalysatorzusammensetzung.

9. Katalysatorzusammensetzung enthaltend
a) eine oder mehrere Verbindungen nach einem der Ansprüche 1 bis 6 und
b) ein oder mehrere Cokatalysatoren.

10. Katalysatorzusammensetzung nach Anspruch 9, wobei der oder die Cokatalysatoren ausgewählt sind aus der Gruppe bestehend aus organo-metallischen Verbindungen der 1., 2., 12. oder 13. Gruppe des Periodensystems der Elemente nach IUPAC 1985.

11. Katalysatorzusammensetzung nach einem der Ansprüche 9 bis 10, wobei als Cokatalysator Aluminiumverbindungen ausgewählt aus der Gruppe bestehend aus Ethylaluminiumchlorid, Ethylaluminiumsequichlorid, Diethylaluminiumchlorid oder Mischungen dieser Verbindungen eingesetzt werden.

12. Katalysatorzusammensetzung nach einem der Ansprüche 9 bis 11, wobei die Katalysatorzusammensetzung noch einen Promotor enthalten kann.

13. Katalysatorzusammensetzung nach einem der Ansprüche 9 bis 12, wobei der Promotor ausgewählt ist aus der Gruppe bestehend aus Trichloressigsäureethylester, Dichlorphenylessigsäureethylester, Phenyldichloressigsäureethylester und/oder Diphenylchloressigsäureethylester.

14. Verfahren zur Herstellung der Katalysatorzusammensetzung, umfassend die Schritte
α) Bereitstellung der Komponente a) und Komponente b)
β) Mischen der Komponente a) und Komponente b) in einem organischen Lösemittel.

15. Verfahren zur Herstellung von Homo- oder Copolymerisaten aus einem oder mehreren Olefinen in Gegenwart einer Katalysatorzusammensetzung nach einem der Ansprüche 9 bis 13.

16. Verfahren nach Anspruch 15, wobei die Polymerisation in Lösung durchgeführt wird.

17. Verfahren nach einem der Ansprüche 15 bis 16, wobei die Temperatur während der Polymerisation im Bereich von -100 bis 150 °C liegt.

18. Verfahren nach einem der Ansprüche 15 bis 17, wobei die Olefine ausgewählt sind aus der Gruppe bestehend aus α-Olefinen und Cycloolefinen.

19. Verfahren nach einem der Ansprüche 15 bis 18, wobei für die Copolymerisation ein Monomer immer Ethylen ist.

20. Verfahren zur Herstellung eines Ethylen-Propylen-Dien-Polymers nach einem der Ansprüche 15 bis 19, wobei das Dien ausgewählt ist aus der Gruppe bestehend aus Ethylidennorbomen, Dicyclopentadien, Vinylnorbornen oder Mischungen dieser Diene.
